# EUROPÄISCHE PATENTSCHRIFT

(11) **EP 1 335 479 B1**
(45) Veröffentlichungstag und Bekanntmachung des Hinweises auf die Patenterteilung: **24.12.2008**
(21) Anmeldenummer: 03000906.2
(22) Anmeldetag: 16.01.2003
(51) Int. Cl.: H02K 5/24

(54) **Schwingungsisolierende Halterung eines Elektromotors**
Vibration isolating section for holding an electrical motor
Dispositif de fixation d'un moteur électrique permettant une isolation contre les vibrations

(30) Priorität: 02.02.2002 DE 20201601 U
(43) Veröffentlichungstag der Anmeldung: 13.08.2003
(73) Patentinhaber: Ebm-papst Mulfingen GmbH & Co. KG, 74673 Mulfingen (DE)
(72) Erfinder: Bauer, Harry, 97980 Bad Mergentheim (DE); Best, Dieter, 74653 Ingelfingen (DE); Haaf, Martin, Dipl.-Ing. (FH), 97980 Bad Mergentheim (DE); Neckermann, Marcus, Dipl.-Ing. (FH), 97922 Lauda-Königshofen (DE); Sauer, Thomas, Dipl.-Ing., 65510 Idstein (DE)
(74) Vertreter: Zapf, Christoph

(56) Entgegenhaltungen:
- EP-A- 0 800 000
- DE-A- 10 128 535
- US-A- 3 830 595
- US-A- 5 449 153
- US-B1- 6 279 866

## Beschreibung

Die vorliegende Erfindung betrifft eine Anordnung zur schwingungsisolierenden Halterung eines Elektromotors entsprechend dem Oberbegriff des Anspruchs 1.

Die US-B1-6279866 offenbart eine derartige Anordnung.

Derartige schwingungsisolierende Halterungen dienen dazu, die Schwingungen, die von einem Elektromotor z.B. durch Reluktanzmomente, Kommutierungsripple oder durch Schwingungen des angetriebenen Teils, wie z.B. einem Lüfterrad entstehen, so zu isolieren, dass diese dynamischen Kräfte und Momente nicht mehr oder nur noch stark reduziert auf die sie umgebenden Bauteile einwirken und so keine ungünstigen Geräuschentwicklungen verursachen.

Eine derartige Anordnung ist aus dem deutschen Gebrauchsmuster DE 297 22 852 U1 bekannt und hat sich in der Praxis hinsichtlich ihrer Funktionalität gut bewährt. Allerdings treten in der Praxis Einbausituationen auf, die es erfordern, dass die komplette Lüfter-Motoreinheit als vormontiertes Bauteil in ein Gehäuse, insbesondere in ein Gebläsegehäuse eingesetzt werden muss. Dies ist bei der vorgenannten Veröffentlichung nicht vorgesehen. Vielmehr wird hier ein Wellenende des Motors durch eine Öffnung einer Gehäusewandung hindurchgeführt und auf der dem Motor abgewandten Seite mit einem Gebläserad versehen. Eine Vormontage der gesamten Einheit ist nicht möglich.

Aus der DE 199 06 585 A1 und der DE 44 05 577 A1 ist ebenfalls eine Anordnung zur schwingungsgedämpften Halterung eines Elektromotors bekannt . Hierbei ist der Elektromotor über ein elastisches Dämpfungselement an einem Träger, insbesondere der Wand eines Lüftergehäuses befestigt. Auch bei diesen Ausführungsformen bilden Motor und Lüfterrad zunächst zwei Bauteile, die nach der Montage des Motors am Träger miteinander verbunden werden müssen.

Weiterhin ist aus der DE 35 00 867 C2 ein Elektromotor mit einem Bügel zu seiner Halterung bekannt, bei dem die von einem Elektromotor erzeugten Schwingungen von dem Haltebügel und damit dem Chassis weitgehend ferngehalten werden sollen. Die Halterung ist als Haltestreifen, bestehend aus einem ebenen Streifen zur Befestigung des Motors an einem Chassis und einem Haltewinkel, wobei zwischen diesen beiden Teilen ein elastisches Dämpfungselement eingefügt ist, das die Übertragung von Schwingungen weitgehend reduziert. Diese Anordnung scheint nicht dazu geeignet zu sein, für große und relativ schwere Motoren verwendet werden zu können.

Der Erfindung liegt nun die Aufgabe zugrunde, ausgehend von dem beschriebenen Stand der Technik eine Anordnung der gattungsgemäßen Art zu schaffen, die einerseits eine einfache und kostengünstige Montage einer Lüftereinheit an einem Gebläsegehäuse erlaubt und andererseits auch bei relativ großen und schweren Elektromotoren eine effektive Schwingungsisolierung gewährleistet, wobei insbesondere vom Motor erzeugte Schwingungen (Körperschall) nicht auf das als Trägerteil für die Lüftereinheit dienende Gebläsegehäuse übertragen werden.

Dies wird erfindungsgemäß durch eine Anordnung mit den Merkmalen des Anspruchs 1 gelöst.

Die Verbindungsstege zwischen Träger-Halteabschnitt und Motor-Halteabschnitt sind so ausgeführt, dass die beiden Halteabschnitte über mehrere elastische Schwingungselemente miteinander verbunden sind und innerhalb gewisser Grenzen über alle drei Raumrichtungen hinweg relativ zueinander bewegbar sind. Dabei ist die Verbindung zwischen Träger-Halteabschnitt und Motor-Halteabschnitt derart ausgeführt, dass die elastischen Schwingungselemente unter einem Winkel von ca. 45 ° zur Achse des Antriebsmotors angeordnet sind. Hierdurch ergibt sich die in alle drei Raumrichtungen wirkende Schwingungsisolierung. In einer speziellen Ausführungsform ist es auch möglich, weitere parallel zur Motorachse verlaufende Schwingungselemente einzusetzen, so dass eine schwingungstechnisch härtere Anordnung, eventuell für größere und schwerere Gebläseeinheiten gebildet werden kann.

Die elastischen Schwingungselemente sind vorteilhafterweise im Wesentlichen hohlzylindrisch ausgebildete Gummielemente mit Befestigungsansätzen bzw. Einkerbungen zur Montage.

Das Trägerelement ist in axialer Verlängerung am Stator eines Elektromotors befestigt, wobei der Elektromotor zum Antrieb eines Gebläserades dient. Dabei ist der Motor, das Lüfterrad und das als schwingungsisolierende Halterung dienende Trägerelement als komplette Baugruppe vormontiert, wobei das Trägerelement so ausgeführt ist, dass der Träger-Halteabschnitt kreisringförmig mit nach innen gerichteten stegartigen und teilweise abgewinkelten Ansätzen ausgebildet ist und eine radiale Abmessung aufweist, die den Radius des Gebläserades überragt. Dadurch ist es vorteilhafterweise auf montagefreundliche Weise möglich, die komplette Lüftereinheit in eine kreisförmige Öffnung eines Gebläsegehäuses einzusetzen und mittels bekannter Befestigungselemente zu fixieren.

Der Motor-Halteabschnitt weist ebenfalls einen kreisförmigen Außenrand auf, der sich unter Bildung eines relativ geringen Ringspaltes in den Innenraum des Träger-Halteabschnittes einfügt und über die elastischen Schwingungselemente mit diesem verbunden ist. Im Zentrum des Motor-Halteabschnittes ist der Antriebsmotor starr befestigt.

Weitere vorteilhafte Ausgestaltungsmerkmale der Erfindung sind in den Unteransprüchen sowie der folgenden Beschreibung enthalten.

Anhand eines in der Zeichnung dargestellten bevorzugten Ausführungsbeispiels soll die Erfindung im folgenden näher erläutert werden. Dabei zeigen:
- Fig. 1: eine Explosionszeichnung der Anordnung
- Fig. 2: eine perspektivische Zeichnung der kompletten Gebläseeinheit
- Fig. 3: eine Schnittdarstellung gemäß III - III in Fig. 2
- Fig. 4: eine Aufsicht gemäß Pfeil IV in Fig. 3 bei abgenommenem Deckel

In den verschiedenen Figuren der Zeichnungen sind gleiche Teile stets mit den gleichen Bezugszeichen versehen und werden daher in der Regel jeweils nur einmal beschrieben.

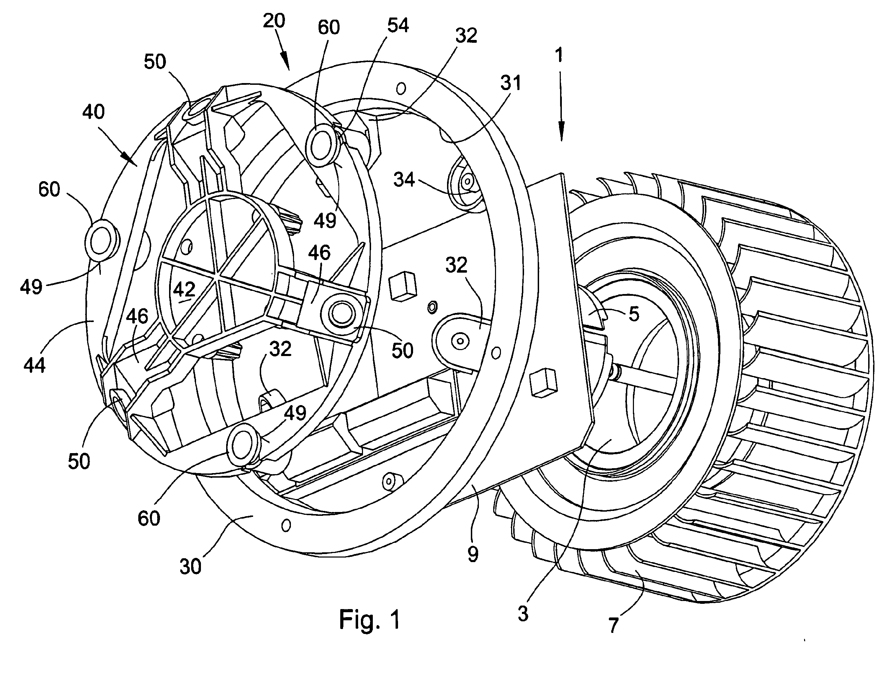

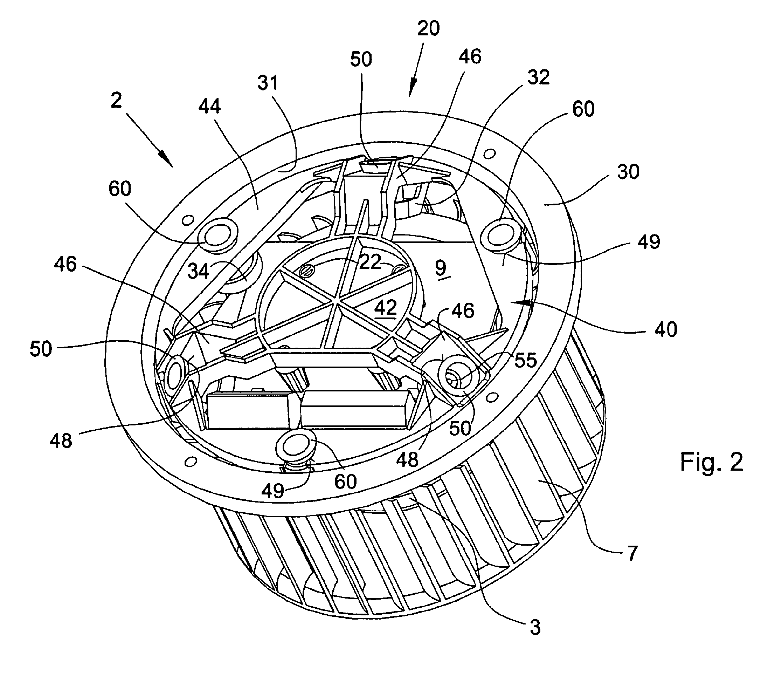

Bei dem in den Figuren 1 bis 4 beschriebenen Ausführungsbeispiel ist ein Elektromotor 1 zum Antrieb eines Lüfterrades 7 vorgesehen und ist hierzu an einer Gehäusewand 17 eines nicht näher dargestellten Gebläsegehäuses über ein im wesentlichen scheibenförmiges Trägerelement 20 befestigt. Der Elektromotor 1 ist in bevorzugter Weise als Außenläufermotor ausgebildet und weist einen Stator 5 auf, der vom Rotor 3 an seiner Stirn- und Umfangsfläche umschlossen wird und mittels nicht näher bezeichneter Lagerelemente im Bereich des Stators über eine den Stator 5 durchgreifende Motorwelle drehbar gelagert ist. Der Rotor 3 des Elektromotors 1 trägt in bekannter Weise das Lüfterrad 7 und ist mit diesem drehfest z.B. durch Aufpressen verbunden. Das Lüfterrad 7, der Elektromotor 1 und das Trägerelement 20 bilden praktisch eine Lüftereinheit 2, die gemeinsam an einer Gehäusewand 17, insbesondere einer Außenwand eines Gebläsegehäuses, befestigt werden, wobei Motor 1 und Lüfterrad 7 eine Öffnung 18 der Wand durchgreifen und in den Innenraum eines Gebläsegehäuses ragen.

Das Trägerelement 20 ist als axiale Verlängerung am Statorflansch 6 des Motor 1 mittels Schrauben 22 befestigt, wobei die Befestigung vorzugsweise aber nicht ausschließlich unter Zwischenschaltung einer die elektronischen Bauelemente des Motors tragenden Leiterplatte 9 erfolgt.

Das Trägerelement 20 besteht erfindungsgemäß aus einem Träger-Halteabschnitt 30 zur Befestigung der Lüftereinheit 2 an einer Gehäusewand und einem Motor-Halteabschnitt (40), an dem der Motor 1 mit Lüfterrad 7 befestigt sind sowie die beiden Teile miteinander verbindenden Verbindungselementen (50).

Dabei besteht das Trägerelement 20 im Einzelnen aus einem äußeren kreisringförmigen Träger-Halteabschnitt 30 zur Befestigung der Lüftereinheit 2 an einer Gehäusewand, vorzugsweise einer Gebläsegehäusewand 17 und weist mehrere radial nach innen gerichtete, axial etwas aus der Ebene des Trägerelementes 20 abgewinkelte stegartige und mit Bohrungen versehene Ansätze 32 auf.

Diese vom Innenrand 31 des Träger-Halteabschnittes 30 ausgehenden, radial nach innen weisenden Ansätze 32 dienen der Verbindung von Träger-Halteabschnitt 30 und Motor-Halteabschnitt 40. Es sind vorzugsweise drei radial nach innen gerichtete Ansätze 32 vorgesehen, die zusätzlich eine vom Motor weg verlaufende Neigung in axialer Richtung aufweisen. Diese Neigung aus der Befestigungsebene heraus, beträgt bei unserem Ausführungsbeispiel ca. 45°. Die Ansätze 32 sind im wesentlichen gleichmäßig über den Umfang verteilt und weisen einen Abstand von ca. 120° zueinander auf. Sie bilden auf ihrer dem Motor abgewandten Seite Auflageflächen für elastische Schwingungselemente 50, die z.B. mittels Schrauben 55 in Bohrungen der Ansätze 32 befestigt werden können.

Die Öffnung 18 an der Gebläsegehäusewand zum Einführen des Lüfterrades (7) in den Innenraum eines Gebläsegehäuse ist dem Durchmesser des kreisringförmigen Träger-Halteabschnittes 30 derart angepasst, dass der Träger-Halteabschnitt 30 auf dem umlaufenden Rand der Öffnung 18 an der Außenseite anliegt und mit der Gehäusewand 17 verschraubt werden kann.

Der Motor-Halteabschnitt 40 weist zwei in seiner Ebene versetzte Bereiche auf, und bildet dabei einen inneren ebenen zentralen Bereich 42, an dem der Motor befestigt ist, und einen äußeren Randbereich 44, der für die Verbindung zum Träger-Halteabschnitt 30 vorgesehen ist. Die beiden Bereiche sind über mehrere speichenartig abgewinkelte Verbindungsstege 46 miteinander verbunden. Die Neigung der Verbindungsstege ist so gewählt, dass sie ausgehend vom zentralen Bereich 42 nach innen, dem Elektromotor 1 zugeneigt verlaufen, wobei die Neigung aus der Ebene des zentralen Bereiches 42 heraus vorzugsweise etwa 45° beträgt.

Im Übergangsbereich der Verbindungsstege 46 zum äußeren Randbereich 44 befindet sich auf jedem Verbindungssteg 40 eine zugeordnete Befestigungsanordnung für ein elastisches Schwingungselement 50. Diese Befestigungsanordnung kann in einer ausreichend groß dimensionierten Öffnung 48 oder Aussparung bestehen, in die bei der Montage ein elastisches Schwingungselement 50 eingeknüpft werden kann. Es sind vorzugsweise drei Verbindungsstege 46 vorgesehen, die gleichmäßig über den Umfang verteilt in einem Winkelbstand von ca. 120° angeordnet sind.

Hierbei ist es wesentlich, dass sowohl die Winkelabstände der Verbindungsstege 46 des Motor-Halteabschnittes 40 mit den Winkelabständen der Ansätze 32 des Träger-Halteabschnittes 30 als auch deren oben angesprochene axiale Neigungen identisch ausgeführt sind. Aufgrund der aufeinander angepassten axialen Neigungen von Verbindungsstegen 46 und Ansätzen 32 ergibt sich beim Zusammenfügen der Teile zwischen Motor-Halteabschnitt 40 und Träger-Halteabschnitt 30 ein von parallel verlaufenden Begrenzungsflächen eingefasster Raum, in den die Schwingungselemente 50 einsetzbar sind.

Die elastischen Schwingungselemente 50, 60 sind im Wesentlichen hohlzylindrisch ausgebildete Gummielemente, die an einem Ende mit einem eine Öffnung 52 aufweisenden Boden versehen sind und am anderen Ende außenseitig nahe des oberen Randes eine Einkerbung 54 zur Befestigung aufweisen. Sie dienen als schwingungsisolierende bzw. schwingungsdämpfende Elemente, bestehen aus Silikonkautschuk und weisen eine Shore-Härte im Bereich von 25 bis 35 auf. Die Öffnung am Boden jedes der elastischen Schwingungselementes 50 dient zur Aufnahme einer Befestigungsschraube 55. Durch die tonnenförmige Gestaltung sind Belastungen in axialer, d.h. auf Druck und Zug, wie auch Verformungen in Kipprichtung möglich.

Beim Zusammenfügen der Teile des Trägerelementes 20 werden zunächst die elastischen Schwingungselemente 50 an ihren Einkerbungen 54 an der oberen Außenseite in die Öffnungen an den Verbindungsstegen 46 des Motor-Halteabschnitts 40 eingeknüpft. Anschließend wird der Träger-Halteabschnitt 30 angefügt, indem die Schwingungselemente 50 auf die Ansätze 32 des Träger-Halteabschnitts 30 aufgesetzt und mit ihnen mittels Schrauben 55 befestigt werden. Hierdurch erfolgt die mechanische Verbindung über eine schwingungsisolierende bzw. schwingungsdämpfende Kopplung, die eine Übertragung von Körperschall vom Motor zum Gehäuse weitgehend verhindert.

Während der Befestigung der beiden Teile fügt sich der Randbereich 44 des Motor-Halteabschnittes 40 unter Bildung eines relativ geringen Ringspaltes in den freien Innenraum des Träger-Haiteabschnittes 30 ein, so dass ein Bauteil mit relativ geringer axialer Höhe entsteht.

In einer weiteren Ausführungsform können neben der radial geneigt angebrachten Schwingungsisolierung weitere drei zusätzlich angebrachte, parallel zur Motorachse verlaufende, axiale Schwingungselemente 60 eingefügt werden. Hierzu weist der Träger-Halteabschnitt 30 weitere etwa mittig in den Zwischenräumen zwischen den Ansätzen 32 angebrachte Ansätze 34 auf, die rein radial, ohne zusätzliche axiale Neigung nach innen vorstehen.

Gegenüberliegend, auf dem Motor-Halteabschnitt 40 befinden sich Aufnahmeöffnungen 49 für die oben beschriebenen Einkerbungen 54 der elastischen Schwingungselemente 60. Beim Zusammenfügen der Teile werden im Bedarfsfalle auch diese Elemente eingesetzt, was zur Folge hat, dass eine, schwingungsmäßig betrachtet, größere Härte erreicht werden kann.

Das Trägerelement 20 kann vorzugsweise als Zink-Druckgussteil hergestellt sein. Es ist aber auch möglich, Teile oder das gesamte Trägerelement aus einem Kunststoffteil zu fertigen, ohne Einschränkungen an der Funktion und Qualität zu befürchten.

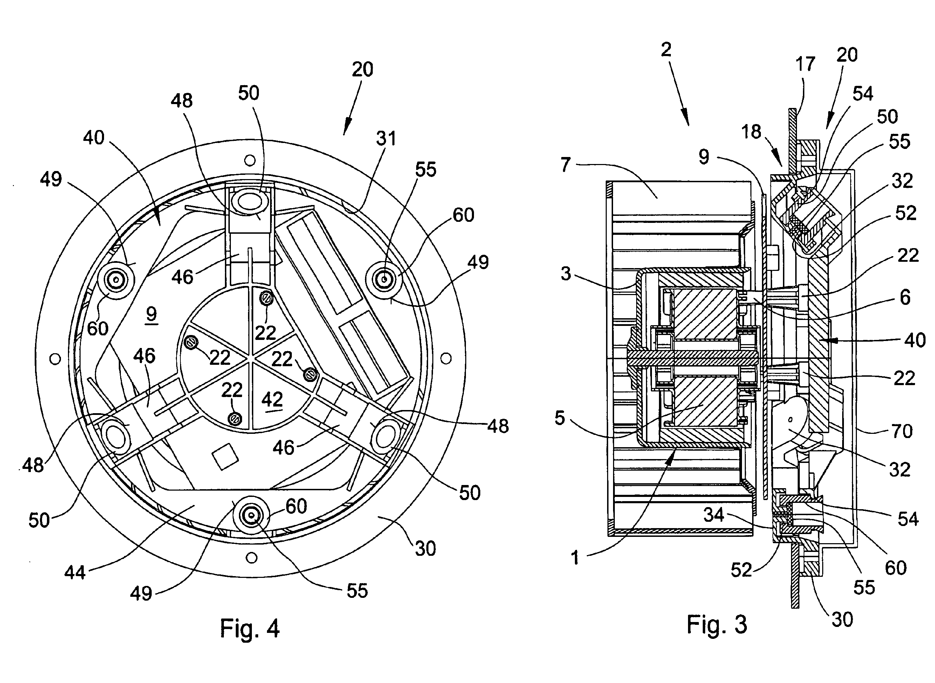

Zur lufttechnischen Abdichtung der Lüftereinheit ist ein Deckel 70 (nur in Fig. 3 dargestellt) vorgesehen, der einen Eintritt oder Austritt von Luft aus dem Lüftergehäuse wirksam verhindert.

## Patentansprüche

1. Anordnung zur schwingungsisolierenden Halterung eines Elektromotors (1) an einer Gehäusewand (17), insbesondere einer Gebläse- oder Lüftergehäusewand, über ein Trägerelement (20) welches einen Motor-Halteabschnitt (40) zum Verbinden mit einem Elektromotor (1) und einen Träger-Halteabschnitt (30) zum Verbinden mit einer Gehäusewand aufweist, wobei der Träger-Halteabschnitt (30) kreisringförmig ausgebildet ist und mehrere radial nach innen weisende Ansätze (34) aufweist und zwischen den Ansätzen (34) und dem Motor-Halteabschnitt (40) elastische Schwingungselemente (60) angebracht sind,
**dadurch gekennzeichnet, dass** der Motor-Halteabschnitt (40) zwei in seiner Ebene versetzte Bereiche aufweist, mit einem inneren zentralen Bereich (42), an dem der Motor (1) befestigt ist, und einem radial äusseren Randbereich (44), der über mehrere speichenartige Verbindungsstege (46) mit dem zentralen Bereich (42) verbunden ist, sowie die speichenartigen Verbindungsstege (46) des Motor-Halteabschnitts (40) im Übergang zum Randbereich (44) dem Elektromotor (1) zugeneigt und am Träger-Halteabschnitt (30) mehrere radial nach innen weisende, in axialer Richtung geneigte Ansätze (32) ausgebildet sind, die eine Auflagefläche für die Schwingungselemente (50) bilden, und die Neigung der Ansätze (32) dem Elektromotor (1) entgegengesetzt gerichtet ist, wobei die Schwingungselemente (50) zwischen den Verbindungsstegen (46) und den Ansätzen (32) angeordnet sind.

2. Anordnung nach Anspruch 1,
**dadurch gekennzeichnet, dass** der Neigungswinkel der Verbindungsstege (46) ca. 45 ° beträgt.

3. Anordnung nach Anspruch 1 oder 2,
**dadurch gekennzeichnet, dass** vorzugsweise drei speichenartige Verbindungsstege (46) vorgesehen sind, die etwa gleichmäßig über den Umfang verteilt in einem Abstand von ca. 120 ° angeordnet sind.

4. Anordnung nach Anspruch 3,
**dadurch gekennzeichnet, dass** vorzugsweise drei Ansätze (32) vorgesehen sind, deren Neigungswinkel jeweils ca. 45 ° beträgt.

5. Anordnung nach einem der Ansprüche 1 bis 4,
**dadurch gekennzeichnet, dass** die Verbindungsstege (46) jeweils eine einem Schwingungselement (50) zugeordnete Befestigungsanordnung aufweisen.

6. Anordnung nach Anspruch 5,
**dadurch gekennzeichnet, dass** die Befestigungsanordnung aus einer entsprechend dimensionierten Öffnung (48) besteht, in der das Schwingungselement (50) befestigt ist.

7. Anordnung nach einem der Ansprüche 1 bis 6,
**dadurch gekennzeichnet, dass** das Schwingungselement (50) ein im Wesentlichen hohlzylindrisch ausgebildetes Gummielement ist, das an einem Ende mit einem eine Öffnung (52) aufweisenden Boden versehen ist und am anderen Ende außenseitig, nahe des oberen Randes eine Einkerbung (54) aufweist.

8. Anordnung nach Anspruch 1,
**dadurch gekennzeichnet, dass** das Schwingungselement (50) aus Silikonkautschuk besteht und eine Shore-Härte zwischen 25 und 35 aufweist.

9. Anordnung nach einem der Ansprüche 6 bis 8,
**dadurch gekennzeichnet, dass** das Schwingungselement (50) in eine Öffnung (48) der speichenartigen Verbindungsstege (46) des Motor-Halteteils (40) eingeknüpft ist und mittels Schrauben (55) durch die Öffnung (52) des Bodens des Schwingungselementes (50) mit dem Träger-Halteteil (30) verschraubt ist.

10. Anordnung nach einem der Ansprüche 1 bis 9,
**dadurch gekennzeichnet, dass** amTräger-Halteabschnitt (30) mehrere radial nach innen vorstehende Ansätze (34) vorgesehen sind, die eine Auflagefläche für axiale Schwingungselemente (60) bilden.

11. Anordnung nach Anspruch 10,
**dadurch gekennzeichnet, dass** dreiradialeAnsätze(34) vorgesehen sind, die in Umfangsrichtung etwa mittig zwischen den Ansätzen (32) angeordnet sind.

12. Anordnung nach Anspruch 111,
**dadurch gekennzeichnet, dass** am Motor-Halteabschnitt (40) Aufnahmeöffnungen (49) vorgesehen sind, die in Umfangsrichtung etwa mittig zwischen den Verbindungsstegen (46) angeordnet sind, in die axial gerichtete Schwingungselemente (60) eingefügt, vorzugsweise mit ihren Einkerbungen (54) eingeknüpft sind.

13. Anordnung nach einem der Ansprüche 9 bis 12,
**dadurch gekennzeichnet, dass** die Schwingungselemente (60) jeweils in eine Öffnung (49) der speichenartigen Verbindungsstege (46) des Motor-Halteteils (40) eingeknüpft sind und mittels Schrauben (55) durch die Öffnung (52) des Bodens des Schwingungselementes (60) mit dem Träger-Halteteil (30) verschraubt sind.

14. Anordnung nach einem der Ansprüche 1 bis 13,
**dadurch gekennzeichnet, dass** der Motor-Halteabschnitt (40) und/oder der Träger-Halteabschnitt (30) aus einem Zink-Druckgussteil gebildet sind.

15. Anordnung nach einem der Ansprüche 1 bis 14,
**dadurch gekennzeichnet, dass** der Motor-Halteabschnitt (40) und/oder der Träger-Halteabschnitt (30) aus Kunststoff bestehen.

16. Anordnung nach einem der Ansprüche 1 bis 15,
**dadurch gekennzeichnet, dass** dasTrägerelement(20)auf seiner dem Lüfterrad (7) abgewandten Seite einen Deckel (70) aufweist, der am Träger-Halteabschnitt (30) vorzugsweise einclipsbar befestigt ist.

17. Anordnung nach einem der Ansprüche 1 bis 16,
**dadurch gekennzeichnet, dass** die radialen Abmessungen des Trägerelementes (20) so gewählt sind, dass der Träger-Halteabschnitt (30) einen größeren Durchmesser als das Lüfterrad (7) aufweist.

18. Anordnung nach einem der Ansprüche 1 bis 17,
**dadurch gekennzeichnet, dass** Lüfterrad (7), Elektromotor (1) und Trägerelement (20) eine Lüftereinheit (2) als Bauteil bilden, das an einer Gehäusewand (17), insbesondere einer Außenseite eines Gebläsegehäuses, befestigt ist, wobei Motor (1) und Lüfterrad (7) eine Öffnung (18) der Wand (17) durchgreifen, in den Innenraum eines Gebläsegehäuses ragen und über den Träger-Halteabschnitt (30) am Umfangsrand der Öffnung (18) befestigt sind.

## Claims

1. An arrangement for the vibration-insulating retention of an electric motor (1) on a housing wall (17), in particular a blower-housing wall or a fan-housing wall, by way of a support element (20) which has a motor-retention portion (40) for connecting to an electric motor (1) and a support-retention portion (30) for connecting to a housing wall, wherein the support-retention portion (30) is made annular and has a plurality of attachments (34) directed radially inwards, and resilient vibration elements (60) are attached between the attachments (34) and the motor-retention portion (40), **characterized in that** the motor-retention portion (40) has two regions offset in its plane, with an inner central region (42) to which the motor (1) is fastened, and a radially outer edge region (44) which is joined to the central region (42) by way of a plurality of spoke-like connecting webs (46), and the spoke-like connecting webs (46) of the motor-retention portion (40) are inclined towards the electric motor (1) in the transition to the edge region (44), and a plurality of attachments (32), which are directed radially inwards and are inclined in the axial direction and which form an abutment face for the vibration elements (50), are formed on the support-retention portion (30), and the inclination of the attachments (32) is directed in an opposite direction to the electric motor (1), wherein the vibration elements (50) are arranged between the connecting webs (46) and the attachments (32).

2. An arrangement according to Claim 1, **characterized in that** the angle of inclination of the connecting webs (46) amounts to approximately 45°.

3. An arrangement according to Claim 1 or 2, **characterized in that** preferably three spoke-like connecting webs (46) are provided, which are arranged distributed substantially uniformly over the periphery at an interval of approximately 120°.

4. An arrangement according to Claim 3, **characterized in that** preferably three attachments (32) are provided, the angle of inclination of which amounts to approximately 45° in each case.

5. An arrangement according to any one of Claims 1 to 4, **characterized in that** the connecting webs (46) have in each case a fastening arrangement associated with a vibration element (50).

6. An arrangement according to Claim 5, **characterized in that** the fastening arrangement consists of a suitably dimensioned opening (48) in which the vibration element (50) is fastened.

7. An arrangement according to any one of Claims 1 to 6, **characterized in that** the vibration element (50) is a rubber element which is made substantially hollow cylindrical and which at one end is provided with a base having an opening (52) and at the other end has an indentation (54) on the outside and close to the upper edge.

8. An arrangement according to Claim 1, **characterized in that** the vibration element (50) consists of silicone rubber and has a Shore hardness of between 25 and 35.

9. An arrangement according to any one of Claims 6 to 8, **characterized in that** the vibration element (50) is attached in an opening (48) in the spoke-like connecting webs (46) of the motor-retention portion (40) and is screwed to the support-retention portion (30) by means of screws (55) through the opening (52) in the base of the vibration element (50).

10. An arrangement according to any one of Claims 1 to 9, **characterized in that** a plurality of attachments (34), which project radially inwards and which form an abutment face for axial vibration elements (60), are provided on the support-retention portion (30).

11. An arrangement according to Claim 10, **characterized in that** three radial attachments (34) are provided, which are arranged substantially centrally between the attachments (32) in the peripheral direction.

12. An arrangement according to Claim 11, **characterized in that** receiving openings (49), which are arranged substantially centrally between the connecting webs (46) in the peripheral direction, are provided on the motor-retention portion (40), axially directed vibration elements (60) being inserted, preferably attached by their indentations (54), in the said connecting webs (46).

13. An arrangement according to any one of Claims 9 to 12, **characterized in that** the vibration elements (60) are attached in each case in an opening (49) in the spoke-like connecting webs (46) of the motor-retention portion (40) and are screwed to the support-retention portion (30) by means of screws (55) through the opening (52) in the base of the vibration element (60).

14. An arrangement according to any one of Claims 1 to 13, **characterized in that** the motor-retention portion (40) and/or the support-retention portion (30) are formed from a zinc die-cast part.

15. An arrangement according to any one of Claims 1 to 14, **characterized in that** the motor-retention portion (40) and/or the support-retention portion (30) consist of plastics material.

16. An arrangement according to any one of Claims 1 to 15, **characterized in that** on its side facing away from the fan wheel (7) the support element (20) has a cover (70) which is fastened to the support-retention portion (30), preferably in a manner capable of being clipped in.

17. An arrangement according to any one of Claims 1 to 16, **characterized in that** the radial dimensions of the support element (20) are selected in such a way that the support-retention portion (30) has a greater diameter than the fan wheel (7).

18. An arrangement according to any one of Claims 1 to 17, **characterized in that** the fan wheel (7), the electric motor (1) and the support element (20) form a fan unit (2) as a component which is fastened to a housing wall (17), in particular an outer side of a blower housing, wherein the motor (1) and the fan wheel (7) pass through an opening (18) in the wall (17), project into the interior of a blower housing and are fastened to the peripheral edge of the opening (18) by way of the support-retention portion (30).

## Revendications

1. Dispositif de fixation, destiné à isoler les vibrations, pour un moteur électrique (1) contre une paroi de carter (17), en particulier une paroi d'un carter d'une soufflante ou d'un ventilateur, par l'intermédiaire d'un élément de support (20) qui comporte une partie de fixation pour moteur (40) destinée à l'assemblage à un moteur électrique (1) et une partie de fixation pour support (30) destinée à l'assemblage à une paroi du carter, la partie de fixation pour support (30) étant circulaire et comportant plusieurs saillies (34) orientées radialement vers l'intérieur, et des éléments de vibration (60) élastiques sont disposés entre les saillies (34) et la partie de fixation pour moteur (40),
**caractérisé en ce que** la partie de fixation pour moteur (40) comporte deux zones décalées dans son plan, à savoir une zone centrale (42) intérieure, à laquelle est fixée le moteur (1), et une zone de bordure (44) radialement extérieure, qui est reliée à la zone centrale (42) par l'intermédiaire de plusieurs barrettes de liaison (46) en forme de rayons, et les barrettes de liaison (46) en forme de rayons de la partie de fixation pour moteur (40) sont inclinées vers le moteur électrique (1) dans la zone de transition vers la zone de bordure (44), et sur la partie de fixation pour support (30) sont réalisées plusieurs saillies (32), qui sont inclinées dans le sens axial et sont orientées radialement vers l'intérieur et qui forment une surface d'appui pour les éléments de vibration (50), et l'inclinaison des saillies (32) est orientée dans le sens opposé au moteur électrique (1), les éléments de vibration (50) étant disposés entre les barrettes de liaison (46) et les saillies (32).

2. Dispositif selon la revendication 1, **caractérisé en ce que** l'angle d'inclinaison des barrettes d'assemblage (46) mesure environ 45°.

3. Dispositif selon la revendication 1 ou 2, **caractérisé en ce qu'**il est prévu de préférence trois barrettes de liaison (46) qui sont réparties à peu près uniformément sur le pourtour et sont disposées à une distance de 120° environ les unes des autres.

4. Dispositif selon la revendication 3, **caractérisé en ce qu'**il est prévu de préférence trois saillies (32) dont l'angle d'inclinaison mesure respectivement 45° environ.

5. Dispositif selon l'une quelconque des revendications 1 à 4, **caractérisé en ce que** les barrettes de liaison (46) comportent chacune un dispositif de fixation associé à un élément de vibration (50).

6. Dispositif selon la revendication 5, **caractérisé en ce que** le dispositif de fixation est formé par une ouverture (48) dimensionnée de manière correspondante, dans laquelle est fixé l'élément de vibration (50).

7. Dispositif selon l'une quelconque des revendications 1 à 6, **caractérisé en ce que** l'élément de vibration (50) est un élément en caoutchouc sensiblement cylindrique creux, dont une extrémité comporte un fond muni d'une ouverture (52) et dont l'autre extrémité comporte sur le côté extérieur une rainure (54) à proximité du bord supérieur.

8. Dispositif selon la revendication 1, **caractérisé en ce que** l'élément de vibration (50) est réalisé en caoutchouc siliconé et possède une dureté Shore entre 25 et 35.

9. Dispositif selon l'une quelconque des revendications 6 à 8, **caractérisé en ce que** l'élément de vibration (50) est inséré dans une ouverture (48) des barrettes de liaison (46) en forme de rayons de la partie de fixation pour moteur (40) et est vissé à la partie de fixation pour support (30) par des vis (55) passant à travers l'ouverture (52) dans le fond de l'élément de vibration (50).

10. Dispositif selon l'une quelconque des revendications 1 à 9, **caractérisé en ce que** sur la partie de fixation pour support (30) sont prévues plusieurs saillies (34) qui s'avancent radialement vers l'intérieur et qui forment une surface d'appui pour des éléments de vibration (60) axiaux.

11. Dispositif selon la revendication 10, **caractérisé en ce qu'**il est prévu trois saillies (34) radiales qui sont disposées sur le pourtour à peu près au milieu entre les saillies (32).

12. Dispositif selon la revendication 11, **caractérisé en ce que** sur la partie de fixation pour moteur (40) sont prévues des ouvertures de réception (49) qui sont disposées sur le pourtour à peu près au milieu entre les barrettes de liaison (46), dans lesquelles des éléments de vibration (60) axiaux sont insérés, de préférence liés, avec leurs rainures (54).

13. Dispositif selon l'une quelconque des revendications 9 à 12, **caractérisé en ce que** les éléments de vibration (60) sont insérés chacun dans une ouverture (49) des barrettes de liaison (46) en forme de rayons de la partie de fixation pour moteur (40) et sont vissés à la partie de fixation pour support (30) par des vis (55) passant à travers l'ouverture (52) dans le fond de l'élément de vibration (60).

14. Dispositif selon l'une quelconque des revendications 1 à 13, **caractérisé en ce que** la partie de fixation pour moteur (40) et/ou la partie de fixation pour support (30) sont formées par un élément moulé sous pression en zinc.

15. Dispositif selon l'une quelconque des revendications 1 à 14, **caractérisé en ce que** la partie de fixation pour moteur (40) et/ou la partie de fixation pour support (30) sont réalisées en matière plastique.

16. Dispositif selon l'une quelconque des revendications 1 à 15, **caractérisé en ce que** l'élément de support (20), sur son côté opposé à la roue de ventilateur (7), comporte un couvercle (70) qui peut être fixé, de préférence par des clips, contre la partie de fixation pour support (30).

17. Dispositif selon l'une quelconque des revendications 1 à 16, **caractérisé en ce que** les dimensions radiales de l'élément de support (20) sont choisies de telle sorte que la partie de fixation pour support (30) a un diamètre supérieur à celui de la roue de ventilateur (7).

18. Dispositif selon l'une quelconque des revendications 1 à 17, **caractérisé en ce que** la roue de ventilateur (7), le moteur électrique (1) et l'élément de support (20) forment une unité de ventilation (2) sous forme de module, laquelle peut être fixée contre une paroi de carter (17), en particulier une face extérieure d'une paroi de carter, sachant que le moteur (1) et la roue de ventilateur (7) passent à travers une ouverture (18) dans la paroi (17), s'engagent à l'intérieur d'un carter de ventilateur et sont fixés contre le bord périphérique de l'ouverture (18) par l'intermédiaire de la partie de fixation pour support (30).
